# EUROPÄISCHE PATENTSCHRIFT

(11) **EP 2 222 953 B1**
(45) Veröffentlichungstag und Bekanntmachung des Hinweises auf die Patenterteilung: **09.08.2017**
(21) Anmeldenummer: 08860826.0
(22) Anmeldetag: 04.12.2008
(51) Int. Cl.: F03B 13/26, F03B 17/06

(54) **UNTERWASSER-TURBINE**
UNDERWATER TURBINE
TURBINE SOUS-MARINE

(30) Priorität: 13.12.2007 DE 202007017544 U
(43) Veröffentlichungstag der Anmeldung: 01.09.2010
(73) Patentinhaber: Schiller, Helmut, 64653 Lorsch (DE)
(72) Erfinder: Schiller, Helmut, 64653 Lorsch (DE)
(74) Vertreter: Katscher Habermann Patentanwälte
(86) Internationale Anmeldenummer: PCT/EP2008/010252
(87) Internationale Veröffentlichungsnummer: WO 2009/074254

(56) Entgegenhaltungen:
- WO-A-03/029645
- WO-A-2006/029496
- DE-A1- 2 635 529
- FR-A- 1 007 883
- FR-E- 56 102

## Beschreibung

Die Erfindung betrifft eine Unterwasser-Turbine zur Energiewandlung von Strömungsenergie aus Wasser, beispielsweise von in Bächen, Flüssen strömendem Wasser bzw. Gezeiten- und/oder Meeresströmungen in mechanische und/oder elektrischer Energie.

Die Druckschrift WO 2006/029496 A1, die als nächstliegender Stand der Technik angesehen wird, offenbart die Merkmale des Oberbegriffs des Anspruchs 1.

Bekannt sind Turbinen mit einem Mantelgehäuse und Venturieinlass um den Massendurchsatz durch die Turbine und die Strömungsgeschwindigkeit am Turbinenrad zu erhöhen, um eine höhere Energieausbeute aus dem bestehenden Turbinenrad zu erzielen.

Der Erfindung liegt die Aufgabe zugrunde die erzielbare Leistung der bekannten Turbinen mit möglichst geringem konstruktivem bzw. apparativem Aufwand kostengünstig wesentlich zu erhöhen.

Diese Aufgabe wird erfindungsgemäß dadurch gelöst, dass der Auslass einer vom strömenden Wasser durchströmten Mantelturbine im Bereich des engsten Querschnitt einer Venturidüsenanordnung o. dgl. angeordnet ist, und dass die Venturidüsenanordnung von zwei diametral gegenüberliegenden Seiten des Turbinengehäuses der Mantelturbine seitlich vortretend angeordnet ist.

Dementsprechend ist der Druck im engsten Querschnitt der Venturidüsenanordnung niedriger als hinter dem Turbinenrad und saugt das Turbinenwasser ab. Hierdurch wird die Druckdifferenz vor und hinter dem Turbinenrad erhöht, was eine größere Turbinendurchströmung und Energiegewinnung zur Folge hat.

Durch die Erhöhung der Strömungsgeschwindigkeit des Wassers in der Turbine kann diese auch in langsam fließenden Gewässern genutzt werden, wobei durch die spezielle Form der das Turbinengehäuse der Mantelturbine von zwei diametral gegenüberliegenden Seiten des Turbinengehäuses der Mantelturbine seitlich vortretend umgebenden Venturidüsenanordnung die Bauhöhe der Unterwasser-Turbine insgesamt minimiert wird. Durch die so erhaltene flache Bauform kann die Turbine dann in Gewässern mit entsprechend niedrigem Wasserstand eingesetzt werden.

Die Mantelturbine ist vorzugsweise als Axialturbine ausgebildet, obwohl grundsätzlich auch andere Turbinen-Bauformen, z. B. Radialturbinen in Frage kommen.

Zur Vermeidung von Leckverlusten in der Mantelturbine empfiehlt es sich, das Turbinenrad dann mit einem äußeren Deckband zu versehen.

Dadurch ist es dann in vorteilhafter Weiterbildung der Erfindung möglich, das äußere Deckband des Turbinenrads in einem gegenüber dem Innendurchmesser des Turbinengehäuses im Durchmesser vergrößerten ringförmig umlaufenden Abschnitt des Turbinengehäuses anzuordnen, wodurch es auch möglich wird, zwischen der äußeren Umfangsfläche des Deckbands und dem im Durchmesser vergrößerten Abschnitt des Turbinengehäuses vorzugsweise als berührungslos abdichtende Labyrinthdichtung ausgebildete Dichtungsmittel anzuordnen.

Im strömungsauslassseitigen Bereich der Venturidüsenanordnung ist dann zweckmäßig wenigstens eine in Wasser-Abströmrichtung verlaufende leitschaufelartige Prallwand zur weitgehenden Vermeidung der Verwirbelung des austretenden Wasserstroms vorgesehen.

Die Mantel-Turbine kann alternativ mit einem getriebelosen Generator oder über ein zwischengeschaltetes Getriebe mit einem Generator ausgestattet sein.

Der Generator ist vorzugsweise ein elektrische Energie liefernder Generator.

Durch Verwendung des vom Generator gelieferten elektrischen Stroms zur elektrolytischen Zersetzung von Wasser kann der Generator zu einem Wasserstoff-Generator weitergebildet werden.

Die Unterwasser-Turbine kann dreh- und/oder schwenkbar auf einer Halterung, z. B. am oberen Ende eines mastartigen Trägers angeordnet werden, dessen unteres Ende auf einem vorgefertigten Fundamentsockel auf dem Grund des Fließgewässers gehalten ist.

Dabei ist auch die Anordnung zwei in entgegengesetztem Drehsinn angetriebenen Unterwasser-Turbinen am oberen Ende des mastartigen Trägers möglich.

Alternativ ist auch die schwebende Anordnung an einem schwimmenden Ponton, oder an einem im Wasser vorgesehenen Auftriebskörper möglich, der mit verstellbaren Halterungen (Seilen) am Grund befestigt ist und sich so nach der Strömungsrichtung ausrichten kann.

Durch die Verstellung der Verankerungshalterung kann die gesamte Turbine aus der horizontalen Ausrichtung geschwenkt werden, um steigende oder fallende Niveaus des strömenden Wassers optimal zu nutzen.

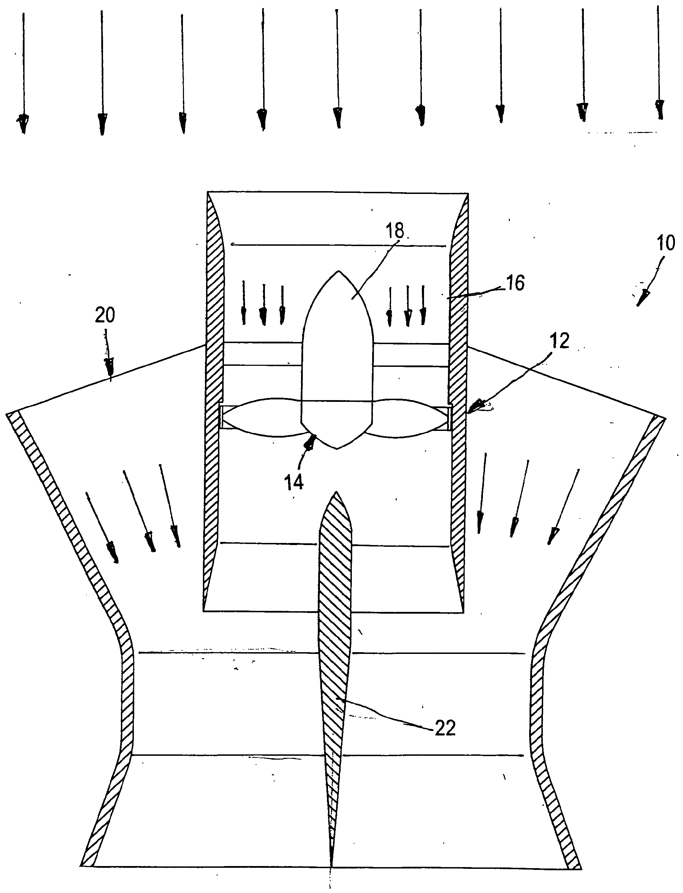

Die Erfindung ist nachstehend in Verbindung mit der Zeichnung eines bevorzugten Ausführungsbeispiel einer erfindungsgemäßen Unterwasser-Turbine im Längsmittelschnitt in schematisierter Darstellung gezeigt.

Das in seiner Gesamtheit mit 10 bezeichnete Ausführungsbeispiel der Unterwasser-Turbine weist eine innere, als Mantelturbine 12 ausgebildete Axialturbine auf, deren Turbinenrad 14 drehfest mit der Achse eines mittig im Turbinengehäuse 16 angeordneten - im dargestellten Fall elektrischen - Generators 18 verbunden ist.

Die Mantelturbine12 ist auslassseitig im Bereich des engsten Querschnitts einer Venturidüsenanordnung 20 angeordnet. Das in der Zeichnung von oben in Abwärtsrichtung zufließende Wasser durchströmt also mit einer Teilmenge im zentralen Bereich die als Axialturbine ausgebildete Mantelturbine, wodurch das Turbinenrad 14 und die drehfest mit diesem verbundene Welle des Generators 18 angetrieben werden und elektrische Energie erzeugt wird.

Eine zweite Teilmenge strömt durch den zwischen der im Innern der Venturidüsenanordnung 20 und der Mantelturbine 12 gebildeten Zwischenraum, wodurch im Bereich des engsten Querschnitts der Venturidüsenanordnung eine die erste aus der Axialturbine abströmende zentrale Teil-Strömungsmenge mit der sie umgebenden äußeren zweiten Teil-Strömungsmenge höherer Strömungsgeschwindigkeit zusammengeführt wird. Infolge des dabei am Turbinenauslass erniedrigten Drucks wird das Druckgefälle zwischen Turbinenein- und -auslass erhöht und so die Turbinenleistung gesteigert.

Die Venturidüsenanordnung 20 ist beim dargestellten Ausführungsbeispiel - abweichend von der üblichen Ausgestaltung von Venturidüsen, bei welchen das Gehäuse in der Regel kreisquerschnittsförmig ausgebildet ist - zu einem in Höhenrichtung zusammengedrückten verbreiterten Querschnitt - z. B. nach Art eines Ovals - verformt ausgebildet, so dass auf gegenüberliegenden Seiten des Turbinengehäuses 16 der Mantelturbine 12 zwei teilweise oder vollständig getrennte Strömungsräume für die äußere die Venturidüsenanordnung durchströmende(n) Teilströmungsmenge(n) gebildet ist bzw. sind. Zur Verhinderung der Entstehung von energieverzehrenden Verwirbelungen in der abströmenden Gesamtströmungsmenge durch die Radialkomponenten der äußeren Teil-Strömungsmenge(n) ist auslassseitig eine in Längsmitlefrichtung der Unterwasser-Turbine verlaufende leitschaufelartige Prallwand 22 vorgesehen, die auch ein Stück weit in die Auslassseite des Turbinengehäuse 16 der Mantelturbine 12 geführt ist und den abströmseitigen Teil der Venturidüsenanordnung den Sog in der Teilströmungsmenge erhöhend radial durchsetzt.

## Patentansprüche

1. Unterwasser-Turbine (10) zur Energiewandlung von Strömungsenergie aus Wasser, beispielsweise von in Bächen, Flüssen strömendem Wasser bzw. Gezeiten- und/oder Meeresströmungen in mechanische und/oder elektrischer Energie,
**dadurch gekennzeichnet,**
**dass** der Auslass einer vom strömenden Wasser durchströmten Mantelturbine (12) im Bereich des engsten Querschnitts einer Venturidüsenanordnung (20) o. dgl. angeordnet ist, und
**dass** die Venturidüsenanordnung (20) von zwei diametral gegenüberliegenden Seiten des Turbinengehäuses (16) der Mantelturbine (12) seitlich vortretend angeordnet ist.

2. Unterwasser-Turbine nach Anspruch 2, **dadurch gekennzeichnet, dass** die Mantelturbine (12) als Axialturbine ausgebildet ist,

3. Unterwasser-Turbine nach Anspruch 2, **dadurch gekennzeichnet, dass** das Turbinenrad (14) der als Axialturbine ausgebildeten Mantelturbine (12) mit einem äußeren Deckband versehen ist.

4. Unterwasser-Turbine nach Anspruch 3, **dadurch gekennzeichnet, dass** das äußere Deckband des Turbinenrads (14) in einem gegenüber dem Innendurchmesser des Turbinengehäuses (16) im Durchmesser vergrö-ßerten ringförmig umlaufenden Abschnitt des Turbinengehäuses (16) angeordnet ist.

5. Unterwasser-Turbine nach Anspruch 4, **dadurch gekennzeichnet, dass** zwischen der äußeren Umfangsfläche des Deckbands und dem im Durchmesser vergrößerten Abschnitt des Turbinengehäuses (16) vorzugsweise als Labyrinthdichtung ausgebildete Dichtungsmittel vorgesehen sind.

6. Unterwasser-Turbine nach einem der Ansprüche 1 bis 5 und/oder einem der Ansprüche 6 bis 8, **dadurch gekennzeichnet, dass** im strömungsauslassseitigen Bereich der Venturidüsenanordnung (20) wenigstens eine in Wasser-Abströmrichtung verlaufende leitschaufelartige Prallwand (22) zur weitgehenden Vermeidung der Verwirbelung des austretenden Wasserstroms vorgesehen ist.

7. Unterwasser-Turbine nach einem der Ansprüche 1 bis 6, **dadurch gekennzeichnet, dass** die Turbine (12) mit einem getriebelosen Generator (18) ausgestattet ist

8. Unterwasser-Turbine nach einem der Ansprüche 1 bis 7, **dadurch gekennzeichnet, dass** die Turbine (12) mit einem Getriebe und Generator (18) ausgestattet ist usw.

9. Unterwasser-Turbine nach Anspruch 7 oder 6, **dadurch gekennzeichnet, dass** der Generator ein elektrische Energie liefernder Generator (18) ist.

10. Unterwasser-Turbine nach einem der Ansprüche 7 bis 9, **dadurch gekennzeichnet, dass** der Generator ein durch elektrolytische Zersetzung von Wasser Wasserstoff liefernder Generator ist.

11. Unterwasser-Turbine nach einem der Ansprüche 1 bis 10, **gekennzeichnet durch** die Anordnung am oberen Ende eines mastartigen Trägers, dessen unteres Ende an einem vorgefertigten Fundamentsockel gehalten ist.

12. Unterwasser-Turbine nach Anspruch 11, **dadurch gekennzeichnet, dass** am oberen Ende des mastartigen Trägers zwei in entgegengesetztem Drehsinn angetriebene Unterwasser-Turbinen vorgesehen sind.

## Claims

1. Underwater turbine (10) for converting flow energy from water, for example from water flowing in brooks, rivers or tidal and/or ocean currents, into mechanical and/or electrical energy,
**characterized in that**
the outlet of a shrouded turbine (12) which is flown through by the flowing water is arranged in the area where the cross-section of a Venturi nozzle arrangement (20) or the like is narrowest, and
the Venturi nozzle arrangement (20) is arranged laterally protruding from two diametrically opposite sides of the turbine housing (16) of the shrouded turbine (12).

2. Underwater turbine according to claim 2, **characterized in that** the shrouded turbine (12) is configured as axial turbine.

3. Underwater turbine according to claim 2, **characterized in that** the turbine wheel (14) of the shrouded turbine (12) configured as axial turbine is provided with an outer shroud.

4. Underwater turbine according to claim 3, **characterized in that** the outer shroud of the turbine wheel (14) is arranged in an annular circumferential section of the turbine housing (16) which has an enlarged diameter in relation to the inner diameter of the turbine housing (16).

5. Underwater turbine according to claim 4, **characterized in that** sealing means, preferably configured as a labyrinth seal, are provided between the outer circumferential surface of the shroud and the enlarged diameter section of the turbine housing (16).

6. Underwater turbine according to one of claims 1 to 5 and/or one of claims 6 to 8, **characterized in that** at least one guide vane-like baffle wall (22) running in the water outflow direction is provided on the flow outlet side of the Venturi nozzle arrangement (20) for preventing turbulence of emerging water flow.

7. Underwater turbine according to one of claims 1 to 6, **characterized in that** the turbine (12) is equipped with a gearless generator (18).

8. Underwater turbine according to one of claims 1 to 7, **characterized in that** the turbine (12) is equipped with a gear and generator (18) etc.

9. Underwater turbine according to claim 7 or 6, **characterized in that** the generator is a generator (18) which supplies electric energy.

10. Underwater turbine according to one of claims 7 to 9, **characterized in that** the generator is a generator (18) which supplies hydrogen by electrolytic decomposition of water.

11. Underwater turbine according to one of claims 1 to 10, **characterized by** the arrangement on the upper end of a mast-like support, the lower end thereof is held on a prefabricated base.

12. Underwater turbine according to claim 11, **characterized in that** two underwater turbines driven in opposite rotational directions to one another are provided on the upper end of the mast-like support.

## Revendications

1. Turbine sous-marine (10) destinée à la conversion énergétique d'énergie de courant provenant d'eau, par exemple d'eau s'écoulant dans des ruisseaux, des fleuves ou de courants de marées et/ou courants marins, en énergie mécanique et/ou électrique,
**caractérisée en ce que**
la sortie d'une turbine à enveloppe (12) traversée par de l'eau affluente est disposée dans la zone de la section transversale la plus étroite d'un agencement de tube de Venturi (20) ou similaire, et
**en ce que** l'agencement de tube de Venturi (20) est disposé en avançant latéralement de deux côtés diamétralement opposés de la carcasse de turbine (16) de la turbine à enveloppe (12).

2. Turbine sous-marine selon la revendication 2, **caractérisée en ce que** la turbine à enveloppe (12) est réalisée comme turbine axiale.

3. Turbine sous-marine selon la revendication 2, **caractérisée en ce que** la roue de turbine (14) de la turbine à enveloppe (12) réalisée comme turbine axiale est munie d'un anneau de recouvrement extérieur.

4. Turbine sous-marine selon la revendication 3, **caractérisée en ce que** l'anneau de recouvrement extérieur de la roue de turbine (14) est disposé dans une section de la carcasse de turbine (16), périphérique de manière annulaire, de diamètre agrandi par rapport au diamètre intérieur de la carcasse de turbine (16).

5. Turbine sous-marine selon la revendication 4, **caractérisée en ce que** des moyens d'étanchéité réalisés de préférence comme joint labyrinthe sont ménagés entre la surface circonférentielle extérieure de l'anneau de recouvrement et la section, de diamètre agrandi, de la carcasse de turbine (16).

6. Turbine sous-marine selon l'une quelconque des revendications 1 à 5 et/ou l'une quelconque des revendications 6 à 8, **caractérisée en ce que** dans la zone de l'agencement de tubes de Venturi (20), côté sortie du courant, au moins un déflecteur (22) de type à aubes directrices s'étendant en direction d'écoulement de l'eau est ménagé pour essentiellement éviter le tourbillonnement du courant d'eau sortant.

7. Turbine sous-marine selon l'une quelconque des revendications 1 à 6, **caractérisée en ce que** la turbine (12) est équipée d'un générateur sans engrenage.

8. Turbine sous-marine selon l'une quelconque des revendications 1 à 7, **caractérisée en ce que** la turbine (12) est équipée d'un engrenage et d'un générateur (18).

9. Turbine sous-marine selon la revendication 7 ou 6, **caractérisée en ce que** le générateur est un générateur (18) fournissant de l'énergie électrique.

10. Turbine sous-marine selon l'une quelconque des revendications 7 à 9, **caractérisée en ce que** le générateur est un générateur (18) fournissant de l'hydrogène par décomposition électrolytique d'eau.

11. Turbine sous-marine selon l'une quelconque des revendications 1 à 10, **caractérisée par** la disposition sur l'extrémité supérieure d'un support en forme de mât dont l'extrémité inférieure est maintenue sur un socle de base préfabriqué.

12. Turbine sous-marine selon la revendication 11, **caractérisée en ce que** sur l'extrémité supérieure du support en forme de mât sont ménagées deux turbines sous-marines entraînées en sens de rotation inverse.
